# EUROPEAN PATENT APPLICATION

(11) **EP 2 521 402 A1**
(43) Date of publication of application: **07.11.2012**
(21) Application number: 12172893.5
(22) Date of filing: 03.04.2007
(51) Int. Cl.: H04W 48/18, H04W 84/12, H04W 88/06

(54) **System with a dual mode WLAN/GSM terminal in which calls are established over WLAN or GSM network**

(30) Priority: 16.01.2007 US 653408; 29.06.2006 EP 06116323
(62) Divisional of application: 07735368.8
(71) Applicant: Nokia Corporation, 02150 Espoo (FI)
(72) Inventor: Lafuente, Javier, 00180 Helsinki (FI); Vehmanen, Kai, 00120 Helsinki (FI); Niemi, Aki, 00610 Helsinki (FI)
(74) Representative: Nokia Corporation

(57) **Abstract**

The present application relates to dual-mode GSM/WLAN terminals and how to establish calls in a convenient and cost-effective manner. In the prior art the user has to manually select between the access technology to use. This problem is solved by the application in that, when a terminal with an active account enters the coverage area of the WLAN, the server registers the terminal to the WLAN. When another terminal sends a call request to it (INVITE sip: 358041111111@server), the [SIP] server will proxy the call request message to it (INVITE sip:userB@10.0.8). If the called terminal is not registered or does not even have an account then the [SIP] server will tell the calling terminal to do a GSM call.

## Description

### Field of the invention

The present invention relates to an account creation system, including provisioning and identity handling, for creating an account for a terminal at a server and a call processing system for processing a call request originated from the terminal via the server and to a terminal and a server of such systems as well as to methods for creating an account for the terminal and processing the call request.

### Background of the invention

It is a special interest for companies to have an effective and convenient communication system that allows terminals within the company network to communicate with each other, but also allows to communicate with terminals outside the company network in a cost-effective manner. At the same time, the efforts for installation and maintenance of servers involved in such a communication system as well as the efforts for creating accounts for the terminals of the company network and the efforts for handling such terminals should be kept at a low level.

For the purpose of the present invention to be described herein below, it should be noted that
- a terminal may for example be any kind of communication device, such as wireless or wired devices, e.g. personal computers, mobile phones or the like, irrespective of a specific standard to which these conform as long as they are compatible with the account creation system and the call processing system;
- for the account creation system and the call processing system any suitable protocol for operating/message exchange is possible; only as an example it is noted that SIP (session initiation protocol) as well as VoIP (voice over internet protocol) are particularly suitable to be used with the present invention;
- method steps likely to be implemented as software code portions and being run using a processor at one of the server/terminal entities, are software code independent and can be specified using any known or future developed programming language as long as the functionality defined by the method steps is preserved;
- generally, any method step is suitable to be implemented as software or by hardware without changing the idea of the present invention in terms of the functionality implemented;
- method steps and/or devices likely to be implemented as hardware components at one of the server/terminal entities are hardware independent and can be implemented using any known or future developed hardware technology or any hybrids of these, such as MOS (Metal Oxide Semiconductor), CMOS (Complementary MOS), BiCMOS (Bipolar CMOS), ECL (Emitter Coupled Logic), TTL (Transistor Transistor Logic), etc., using for example ASIC (Application Specific Integrated Circuit) components or DSP (Digital Signal Processor) components, as an example;
- devices can be implemented as individual devices, but this does not exclude that they are implemented in a distributed fashion throughout the system, as long as the functionality of the device/system is preserved.

It is to be noted, that the present invention is not only applicable to company networks but also e.g. to networks in private households or the like, for example to provide cost-effective "in-house" calls.

As an example only, reference is made to the deployment of a VoIP system. The prior art discloses several approaches for implementing a VoIP system.

Document GB2410857 discloses a voice and data switching system integrating a router/data switching module into a voice PBX (private branch exchange). Document US6363065 shows an apparatus for a voice over IP telephony gateway and accompanying methods for use therein and document US2005008006 relates to a method and a communication arrangement for operating a VoIP voice terminal.

These documents, however, only relate to wirebound networks and do not refer to any wireless techniques.

As a specific example only, in relation to the present invention, reference is made to the deployment of a VoIP system with dual mode GSM/WLAN (global system for mobile communication / wireless local area network) terminals.

Document WO 2004/100452 discloses how to take advantage of WLAN resources in hotspots for voice and data connections and enables seamless handover between WWAN (wireless wide area network) and WLAN and vice versa.

The main benefit of deploying VoIP is to save money for GSM/PSTN (public switched telephone network) calls. However, some difficulties arise when deploying VoIP in an existing network, like the installation and maintenance of servers, for example SIP servers, and the creation of user accounts as well as the distribution of new contact information (identifications) of the users/terminals (e.g. SIP address or internal phone number). Further problems are WLAN and SIP configuration in the terminal and that the user needs to be aware of VoIP and has to use different terminals and/or different numbers for VoIP and GSM/PSTN calls, i.e. the user has to manually select between VoIP and GSM.

In known deployments, messages like SMS (short message service) are used to send, for example SIP settings to the terminals. However, in such types of deployments, a Web Interface is still necessary to create user accounts, and SIP URIs (uniform resource identifier) and internal phone numbers are used. This means that the terminal identification such as a GSM number is not sufficient for operation in such environment so that new contact details about other users have to be learned. The re-use of a phone number, e.g. a PSTN number can be realized, for example, by Telephone Number Mapping (ENUM). ENUM is able to map PSTN numbers to SIP, but it cannot be controlled by small and medium enterprises since ENUM needs to be deployed at governmental level. Therefore, ENUM is not suitable for enterprises.

The above described problems produce challenging tasks to an IT department in, for example, small and medium enterprises with little IT resources, especially in deployment of VoIP using corporate WLAN networks and dual-mode GSM/WLAN terminals.

### SUMMARY OF THE INVENTION

Accordingly, it is an object of the present invention to provide an account creation system, including provisioning and identity handling, for creating an account for a terminal at a server and a call processing system for processing a call request originated from the terminal via the server and a terminal and a server of such systems as well as methods for creating an account for the terminal and processing the call request, that solve the above described problems.

According to an aspect of the present invention, this object is, for example, achieved by a method of creating an account for a terminal capable to establish a call via at least a first and second access technology at a server entity, the server being enabled to handle calls via said at least first and second access technologies, the method comprising:
composing, by the terminal, an account creation request message containing an identification of the terminal to create an account for the terminal at a server; receiving, at a server, the account creation request message from the terminal based on the messaging system of the first access technology; creating, at said server, an account for the terminal based on the second access technology responsive to receiving the account creation request message; and associating, at a server, the identification of the terminal with the account for the terminal.

According to advantageous further refinements of the invention as defined under the above aspect
- the identification of the terminal is based on the first access technology.
- the method further comprises sending, by a server, an information message to the terminal based on the first access technology to inform the terminal of settings of the account based on the second access technology for the terminal;
- at least one of the account creation request message and the information message is a message conforming to the first access technology;

According to an aspect of the present invention, this object is, for example, additionally achieved by a method of routing a call originating from a calling terminal registered to a server via second access technology, the calling terminal being capable of establishing a call via at least a first and second access technology, to a called terminal capable of being called via at least the first and second access technologies, the method comprising: receiving, at a server, a call request from said calling terminal registered to a server according to the second access technology to the called terminal including an identification of the called terminal; determining, whether the requested identification is associated with an account maintained in a server and the respective called terminal is registered to a server via second access technology; and if the requested identification is associated with an account maintained in a server and the respective called terminal is registered to a server via second access technology; routing the call request based on the second access technology to the called terminal associated with the respective account.

According to advantageous further refinements of the invention as defined under the above aspect
- the method further comprises replying from a server to the calling terminal, if the requested identification is not associated with an account maintained in a server or the respective called terminal is not registered to a server via second access technology;
- upon receipt of the reply from a server, the calling terminal initiates a call based on the first access technology;
- the call based on the first access technology is initiated after confirmation by the user;
- the call based on the first access technology is initiated by the terminal dependent on the result of a tariff check;
- the method further comprises deciding, at a server, whether the call is to be routed based on the first access technology or based on a fixed telephone network gateway, if the requested identification is not associated with an account maintained in a server or the respective called terminal is not registered to a server via second access technology;
- the method further comprises routing the call based on the first access technology or based on the fixed telephone network gateway, based on the result of the decision;
- the method further comprises displaying, which route is used for routing the call on a display of the terminal;
- wherein the first access technology conforms to one of the group of GSM, UMTS and IS-95 telephony and messaging;
- wherein the second access technology conforms to telephony and messaging over TCP/IP networks.

According to an aspect of the present invention, this object is, for example, further achieved by a server, comprising: a multi access transceiver configured to receive an account creation request message comprising an identification of a terminal composed by the terminal; a creator configured to create an account for the terminal composing the account creation request message; an associator configured to associate the identification of the terminal received at a server with the account of the terminal created by the creator; a multi access transceiver further configured to receive a call request from a calling terminal registered to a server according to the second access technology to an identification of a called terminal; a determinator configured to determine whether the requested identification is associated with an account maintained in a server and the respective called terminal is registered to a server via second access technology; a multi access transceiver further configured to route the call request based on the second access technology to the called terminal associated with the respective account.

According to advantageous further refinements of the invention as defined under the above aspect
- the multi access transceiver is further configured to send an information message to the terminal based on the first access technology to inform the terminal of settings of the account based on the second access technology;
- the server further comprises a registerer configured to register a terminal, for which an account has been created, to the server;
- the multi access transceiver is further configured to reply to the calling terminal, if the requested identification is not associated with an account maintained in a server or the respective terminal is not registered to a server;

- the server further comprises a decider configured to decide, whether the call is to be routed based on the first access technology or based on a fixed telephone network gateway, if the requested identification is not associated with an account maintained in a server or the respective terminal is not registered to a server;
- the multi access transceiver is further configured to route the call based on the first access technology or based on the fixed telephone network gateway, based on the result of the decider.

According to an aspect of the present invention, this object is, for example, further achieved by a terminal, comprising: a composer configured to compose an account creation request message containing an identification of the terminal to create an account for the terminal at a server; a multi access transceiver configured to transmit the account creation request message to a server; a generator configured to generate a call request to an identification of a called terminal; a multi access transceiver further configured to receive a reply from a server, if the requested identification is not associated with an account maintained in a server or not currently registered to a server based on the second access technology; an initiator configured to initiate a call based on the first access technology upon receipt of the reply from a server.

According to advantageous further refinements of the invention as defined under the above aspect
- the multi access transceiver is further configured to receive an information message based on the first access technology from a server containing account information;
- the terminal further comprises a detector configured to detect a confirmation by a user prior to initiating a call based on the first access technology upon receipt of the reply from a server;
- the terminal further comprises a tariff checker configured to perform a tariff check prior to initiating a call based on the first access technology upon receipt of the reply from a server;
- the terminal further comprises a display, configured to display which route is used for routing the call.

According to an aspect of the present invention, this object is, for example, further achieved by a system comprising a server and a terminal, basically as defined above under the respective aspects and refinements thereof.

According to the present invention, when two dual mode terminals are within the coverage area of a second access technology, the two dual mode terminals are capable of communicating with each other via the second access technology and when at least one of the two dual mode terminals is not within the coverage area of the second access technology, the dual mode terminals are capable of communicating with each other via a first access technology. Thereby, users do not need to be aware about which access technology is used for communication between the dual mode terminals.

Thus, the present invention provides a way to save money for calls within enterprises or private households or the like using dual mode terminals, e.g. GSM/WLAN terminals. A server according to the present invention can be installed by just plugging it to the existing network and can create accounts for terminals and enables terminal setup by use of a message from the terminal, e.g. SMS, without the need for a web interface or IT support and the IT support for maintenance of the server can be kept at a low level. In the system according to the present invention an identification, e.g. GSM number, of a terminal can be re-used so that a user does not have to know, e.g. a SIP address of a terminal he wants to call and does not have to be aware about using, e.g. GSM or WLAN to establish a call, since e.g. WLAN is automatically selected as the bearer if WLAN is available. At the same time, the system according to the present invention is secure since it is based on, e.g. GSM strong identities. A SMS, for example, is used in the account creation process because it is a trusted messaging/channel system whereas IP is inherently untrusted. Further, the system according to the present invention is compatible with SIP URI calls using domain name SIP when SIP URIs are used. Furthermore, the system according to the present invention works with several terminal, e.g. mobile phones, PC, PDA or the like and does not interrupt parallel SIP deployments.

### BRIEF DESCRIPTION OF THE DRAWINGS

The present invention is described herein below with reference to the accompanying drawings, wherein:
Fig. 1 is a flowchart of the account creation process according to the present invention;
Fig. 2 is a flowchart of the call processing procedure according to a first aspect of the present invention;
Fig. 3 is a flowchart of the call processing procedure according to a second aspect of the present invention;
Fig. 4 is a signalling diagram of the account creation process according to an example of the present invention;
Fig. 5 is a signalling diagram of the call processing procedure according to an example of the first aspect of the present invention;
Fig. 6 is a block diagram of a server according to an example of the present invention;
Fig. 7 is a block diagram of a terminal according to an example of the present invention;
Fig. 8 is a schematically view of a call processing system according to an example of the present invention.
Fig. 9 is a signalling diagram of the account creation process according to a detailed example of the present invention;
Fig. 10 is a signalling diagram of the call processing procedure according to a detailed example of the present invention.

In the figures, individual steps can be merged to be executed simultaneously, or partitioned to sub-steps to be executed sequentially, without essentially modifying the substance of the invention.

### DETAILED DESCRIPTION OF THE INVENTION

The invention will be described herein below with reference to the accompanying drawings.

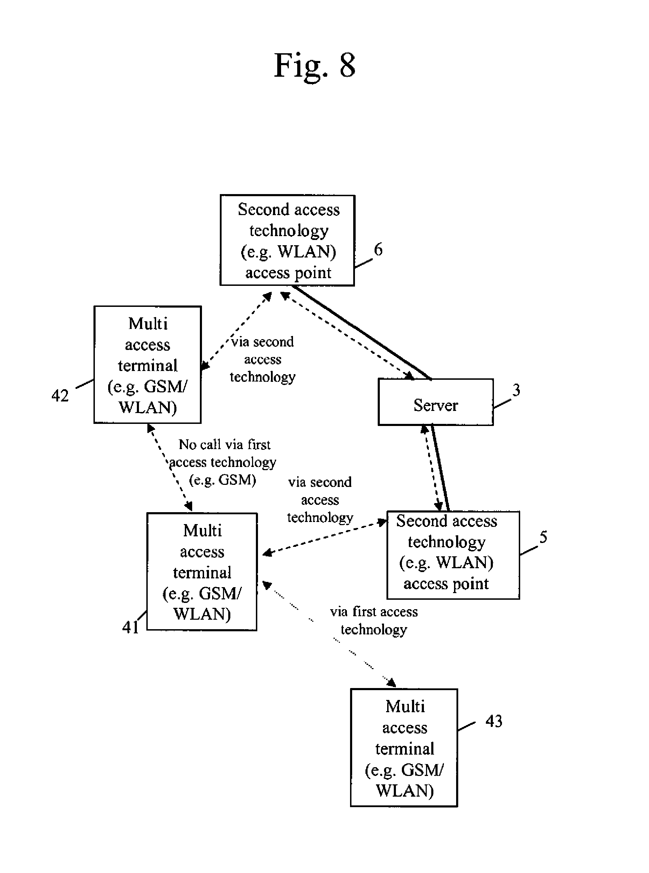

Fig. 8 shows an example of a system according to the present invention. Terminals 41 to 43 are multi access terminals, e.g. dual mode terminals, capable to communicate based on at least a first and second access technology. According to an aspect of the present invention, the first access technology conforms to one of the group of GSM, UMTS, IS-95 telephony and messaging or the like and the second access technology conforms to telephony and messaging over TCP/IP networks or the like. The system comprises at least one access point for the second access technology. In the present example, the system comprises two access points 5 and 6 that are connected to a server 3. An access point and a server of the system can be implemented as a respective single device or can be located separately from each other as shown in the example according to Fig. 8. According to the present example, terminal 41 is a calling terminal and terminals 42 and 43 are called terminals, respectively. As can be seen from Fig. 8, as an example only, a communication between terminals 41 and 42 is based on the second access technology and a communication between the terminals 41 and 43 is based on the first access technology. It is to be noted that generally terminal 41 does not communicate simultaneously with terminals 42 and 43. According to the present invention, there is no need to establish a call via the first access technology between the terminals 41 and 42, thereby providing the possibility to save money for the call. A detailed description of the account creation processing and the call processing in connection with the present invention will be given below.

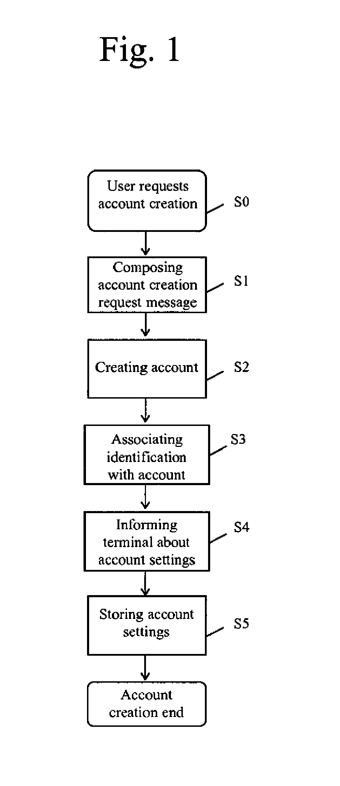

Fig. 1 is a flowchart of the account creation process.

According to Fig. 1, the account creation process is started at step S0, whereafter at step S1 a terminal composes the account creation request message containing at least its identification and optionally a user name. After receiving the account creation request message containing at least the identification of the terminal based on the first access technology, the server creates an account for the terminal based on and/or for use with the second access technology at step S2. Then, at step S3, the identification of the terminal is associated with the account of the terminal created by the server. Thus, the server provides a secure binding between the identification of the terminal based on the first access technology and the account of the terminal based on the second access technology as account settings. After this, the server in an advantageous embodiment of the invention informs the terminal of the account settings by sending an information message based on the first access technology, as shown at step S4. The account creation request message as well as the information message may be a message conforming to the first access technology. The account settings may then be stored by the terminal in a setting memory and by the server in a storage medium at step S5. A terminal may thus create an account with the server even if it is not within the coverage area defined by the second access technology available at the server. The system is thus prepared for call processing according to aspects of the present invention.

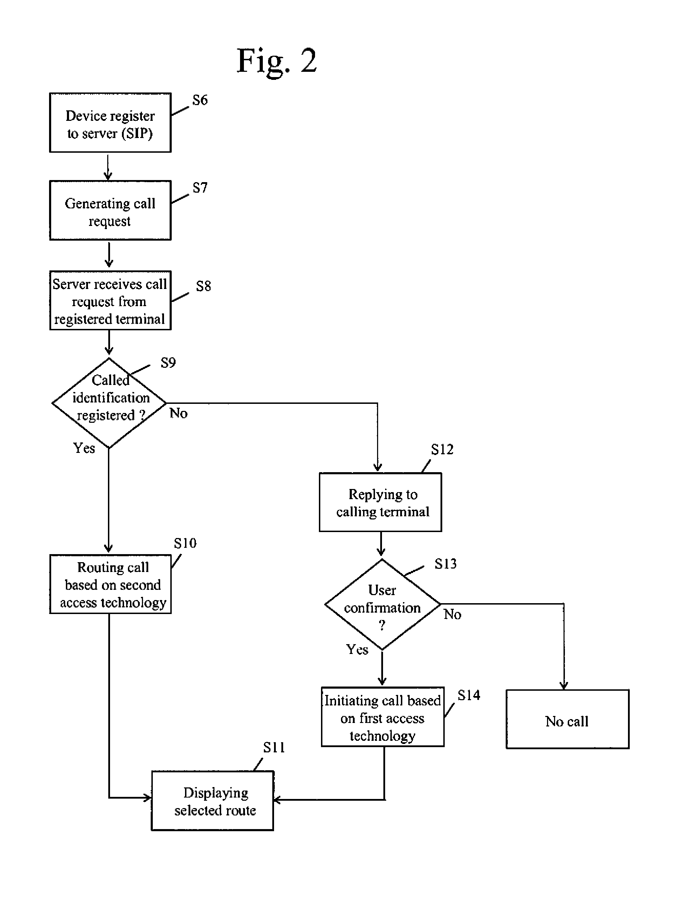

Fig. 2 is a flowchart of the call processing procedure according to a first aspect of the present invention.

When a terminal enters the coverage area of a second access technology, the terminal tries to connect to the server using the second access technology. The server verifies if the terminal trying to connect to the network has an active account at the server and if the terminal does, at step S6, the server registers the terminal to the network based on the second access technology. Then, the server may inform the terminal that it is registered to the server. After being registered to the server using the second access technology, a terminal requesting a call (hereinafter referred to as calling terminal) to another terminal (hereinafter referred to as called terminal), sends a call request preferably via the second access technology to the server at step S7. The call request includes the identification of the called terminal according to the first access technology. At step S8 of Fig. 2, the server receives the call request from the calling terminal generated at step S7 preferably based on the second access technology. At step S9, the server determines if the identification requested by the calling terminal is associated with an account maintained in the server, i.e. the server determines if the called terminal is has an active account at the server and if the called terminal is registered to the server. If it is determined at step S9 that the called terminal has an active account at the server and is registered to the server based on the second access technology, at step S10, the call is routed via the second access technology to the called terminal according to the respective account maintained in the server. Additionally, for convenience of users, the selected route can be displayed on a display of at least one of the calling terminal and the called terminal, as shown at step S11.

If otherwise it is determined at step S9 that the identification requested by the calling terminal is not associated with an active account maintained in the server, i.e. if it is determined that the called terminal either has no active account at the server or is not registered to the server via second access technology, according to a first aspect of the present invention, the server replies to the calling terminal preferably via the second access technology at step S12 and informs the calling terminal that the call cannot be established via the second access technology. Upon receipt of the reply from the server, the terminal could display to a user that the call cannot be established via the second access technology and then wait for a confirmation by the user to initiate the call via the first access technology. If the terminal detects a user confirmation at step S13, the calling terminal initiates the call via the first access technology at step S14 and, as described above, the selected route could be displayed on the display of at least one of the calling terminal or the called terminal at step S11. If the terminal detects no confirmation by the user in step S13, no call is initiated.

As an alternative, the terminal can initiate the call based on the first access technology immediately upon receipt of the reply from the server without the need of detecting a confirmation by the user.

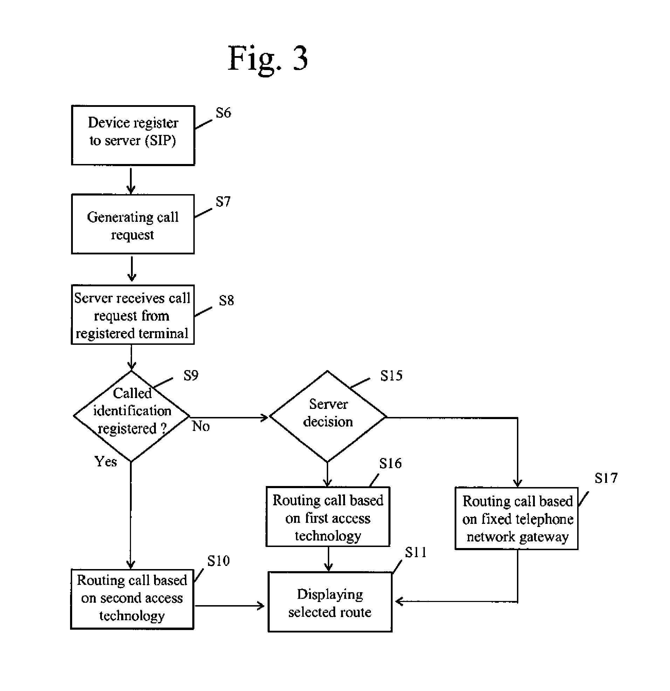

Fig. 3 is a flowchart of the call processing procedure according to a second aspect of the invention.

In the flowchart according to Fig. 3, steps S6 to S11 are the same as in the flowchart according to Fig. 2 and therefore a description of these steps will be omitted.

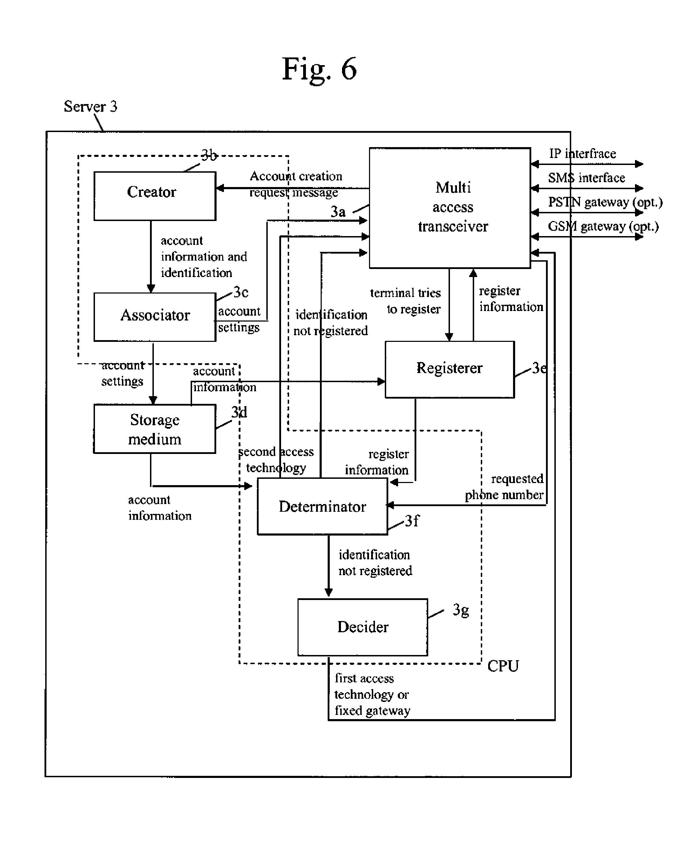

If at step S9 it is determined that the identification requested by the calling terminal is not associated with an active account maintained in the server, i.e. if it is determined that the called terminal either has no active account at the server or is not registered to the server via second access technology, according to a second aspect of the present invention, the server decides at step S15, whether the call is to be routed via the first access technology or via a fixed telephone network gateway. This decision can be made, for example, by comparing the costs that are expected to occur when routing the call, based e.g. on daytime or generally on the applicable tariff. This decision can also be made, for example, by comparing a quality of service (QoS) offered by the respective routes. Any QoS parameters can be evaluated in this relation. The server will then select, for example, the route which is expected to have the lower costs or offers the better QoS. If at step S15 the route based on the first access technology is selected by the server, the call is routed via the first access technology at step S16. If at step S15 the route based on the fixed telephone network gateway is selected, the call is routed via the fixed telephone network gateway at step S17. Additionally, the respective selected route can be display on the display in an analogous manner as described above with reference to Fig. 2. Fig. 6 is a block diagram of a server according to the present invention.

As shown in Fig. 6, the server 3 comprises a multi access transceiver 3a capable of sending and receiving based on at least a first and second access technology. The transceiver 3a comprises interfaces, for example, an IP interface, a SMS interface and optionally interfaces to connect to a PSTN gateway and/or a GSM gateway or the like. Within the scope of this specification, a multi-access transceiver may also be construed to refer to a plurality of single-access transceivers. Via the multi access transceiver 3a (hereinafter referred to as the transceiver), the server is capable to communicate with a terminal, e.g. to receive the account creation request message and call requests from the terminal, to send the information message and the reply to the terminal as well as to handle calls routed via the server. Further, the transceiver 3a is capable of receiving a registering request from a terminal entering the coverage area of the second access technology and trying to register to the server based on the second access technology. The transceiver 3a can be integrated into the server or the transceiver can be located separately from the server. The transceiver 3a is connected to a creator 3b and forwards the account creation request message received from a terminal to the creator 3b, which creates an account for the terminal based on and/or for use with the second access technology. The creator 3b is connected to an associator 3c, which obtains the account information from the creator 3b and associates the identification, conforming to the first access technology, of the terminal 4 with the created account. The associator 3c is connected to the transceiver 3a. The transceiver 3a obtains the account settings from the associator 3c and sends the account settings to the terminal in an information message. Also connected to the associator 3c is a storage medium 3d, which stores the account settings.

Further, the server 3 comprises an registerer 3e that is connected to the transceiver 3a. The registerer 3e is informed by the transceiver 3a that a terminal is within the coverage area of the second access technology and tries to register to the server based on the second access technology. The registerer is connected to the storage medium 3d and retrieves account information therefrom to decide if the terminal trying to register to the server has an active account. If the respective terminal has an active account, the registerer 3e registers the terminal to the server based on the second access technology and may inform the registered terminal by sending registration information to the registered terminal via the transceiver 3a. A determinator 3f is connected to the transceiver 3a and the registerer 3e. After receiving a call request from a calling terminal to a called terminal at the transceiver 3a, the transceiver 3a forwards the requested identification of the called terminal to the determinator 3f and the determinator 3f determines, if the identification of the called terminal is associated with an account stored in the storage medium at the server 3 and, if so, further determines if the called terminal according to the respective account is registered to the server based on information acquired from the registerer 3e.

If the called terminal is registered to the server, the determinator 3f informs the transceiver 3a, connected to the determinator 3f, about the respective called terminal and the transceiver 3a routes the call based on the second access technology to the called terminal.

If the requested identification is not associated with an account stored at the server 3 or if the respective called terminal is not registered to the server, then the determinator 3f replies via the transceiver 3a to the calling terminal, that the requested call cannot be routed via the server based on the second access technology. Then, the further call processing is performed at the calling terminal, according to one option of the present invention (see Fig. 2 and the description thereof).

Alternatively, if the requested identification is not associated with an account stored at the server 3 or if the respective called terminal is not registered to the server, then the determinator 3f forwards the requested identification to a decider 3g connected to the determinator 3f. The decider 3g decides, as described above with reference to Fig. 3, which route should be selected for establishing the requested call, i.e. the route via the first access technology or the route via a fixed telephone network gateway, and forwards the selected route to the transceiver 3a. The transceiver 3a then routes the call based on the respective route decided by the decider 3g via the respective gateway to the called terminal.

The processing of all components comprised in the server is either controlled by a central processing unit (CPU) or by separate processing units, respectively, e.g. DSPs or the like, that are not shown in Fig. 6.

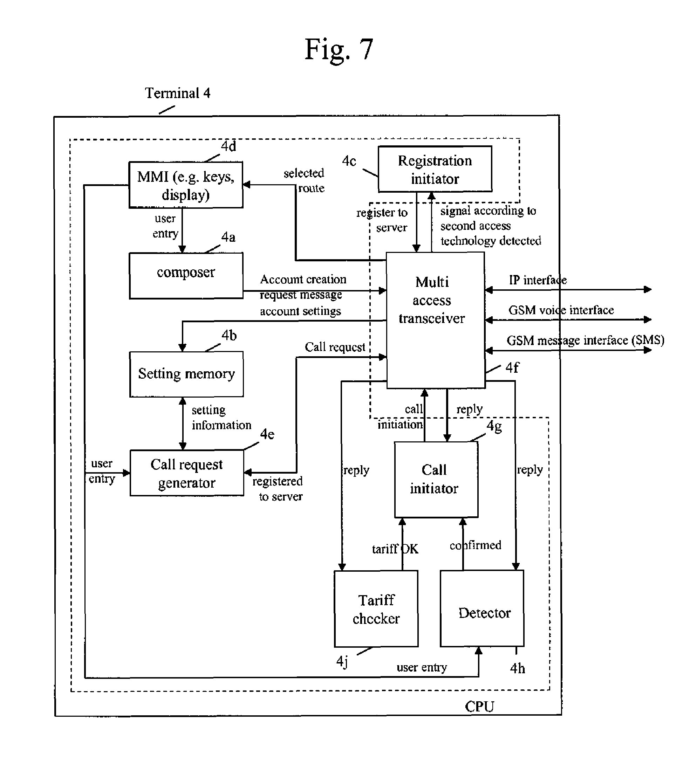

Fig. 7 is a block diagram of a terminal 4 according to the present invention.

As can be seen from Fig. 7, the terminal 4 comprises a multi access transceiver 4f (hereinafter referred to as transceiver 4f) capable of sending and receiving based on at least a first and second access technology. The transceiver 4f comprises interfaces, like for example, a GSM voice interface, a GSM message interface (SMS) and an IP interface. Via the transceiver 4f, the terminal is capable of communicating with other terminals or a server, e.g. to send an account creation request message, registration request or call request and to receive an information message, send and receive signals according to at least the first and second access technologies or registration information. The transceiver 4f can be integrated into the terminal or the transceiver can be separated from the terminal. However, with respect to a hand portable device as an example for a terminal, the transceiver is preferably integrated into the terminal.

A man-machine-interface (MMI) 4d, generally comprising a display and keys or the like, is connected to a composer 4a to receive instructions from a user. The composer 4a is in turn connected to the transceiver 4f and upon a user entering account creation instructions via the MMI 4d, the composer 4a composes an account creation request message and forwards the account creation request message to the transceiver 4f. The transceiver 4f sends the account creation request message to the server and then preferably receives the setting message from the server and forwards it to a setting memory 4b, connected to the transceiver 4f. The setting memory 4b stores any account settings.

The terminal 4 further comprises an registration initiator 4c that detects if the terminal 4 is within the coverage area of the second access technology. Upon receipt of a signal according to the second access technology forwarded from the transceiver 4f, the registration initiator 4c sends a registration request via the transceiver 4f to the server, to be registered to the server according to the second access technology. When the terminal 4 is registered to the network according to the second access technology, a call request generator 4e connected to the transceiver 4f is informed by the transceiver 4f, which forwards registartion information received from the server. Then, when the call request generator 4e, which is further connected to the MMI 4d generates a call upon instruction from a user, it preferably retrieves the settings information from the setting memory 4b and the call request generator 4e forwards the call request to the transceiver 4f, which then sends the call request preferably via the second access technology to the server based on the setting information obtained by the call request generator 4e from the setting memory 4b. In case a called terminal according to a requested identification is registered to the server, the call is established based on the second access technology. Optionally, the MMI 4d, connected to the transceiver 4f is informed about the selected route and displays the selected route.

If the called terminal according to the requested identification has no account at, or is not registered to the server, the transceiver 4f receives a reply from the server. With this reply, the terminal is informed that the call cannot be routed via the second access technology and the transceiver forwards the reply to a call initiator 4g connected to the transceiver 4f, that is capable of initiating a call over the first access technology via the transceiver 4f.

As an alternative, a user confirmation detector 4h is connected to the transceiver 4f, the call initiator 4g and the MMI 4d. The reply from the server is forwarded to the user confirmation detector 4h. If the user confirmation detector 4h receives a user confirmation from the MMI 4d, it informs the call initiator 4g, and then the call initiator 4g initiates a call based on the first access technology via the transceiver 4f.

As a further alternative, a tariff checker 4j is connected to the transceiver 4f and the call initiator 4g and the reply from the server is forwarded to the tariff checker 4j. Then the tariff checker 4j performs a tariff check based, for example, on the day time of the call request or the like, as described above. If the tariff is appropriate, the tariff checker 4j informs the call initiator, and then the call initiator 4g initiates a call based on the first access technology via the transceiver 4f.

After the call is established based on the first access technology, optionally the MMI 4d connected to the transceiver 4f can be informed about the selected route and displays the selected route.

The processing of all components comprised in the terminal is either controlled by a central processing unit (CPU) or by separate processing units, respectively, e.g. DSPs or the like, that are not shown in Fig. 7.

As an example of the present invention only, reference is made to a VoIP system with dual mode GSM/WLAN terminals, wherein GSM is an example for the first access technology and WLAN is an example for the second access technology. The invention, however, is not limited to a VoIP system and also various other access technologies than GSM e.g. UMTS, IS-95 or the like can be used as the first access technology and also various other access technologies than WLAN e.g. Bluetooth®, WiMAX can be used as the second access technology. As another example, the first access technology can be a circuit-switched access technology and the second access technology a packet-switched access technology.

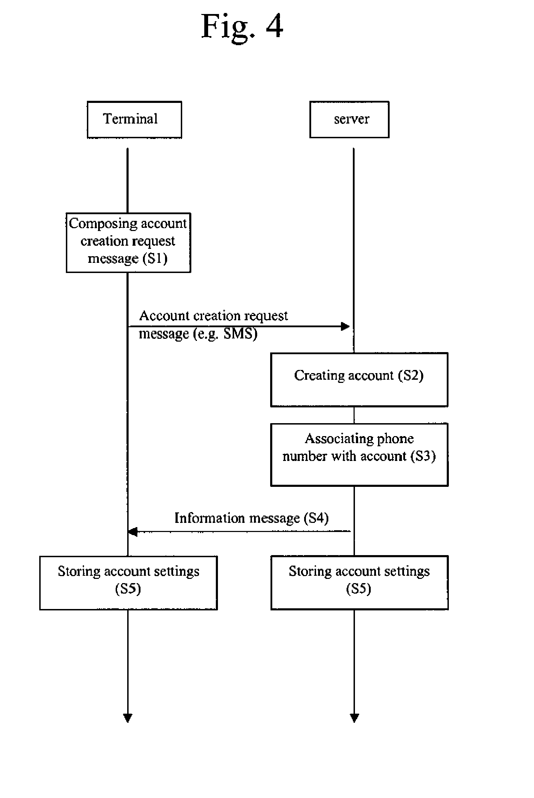

Fig. 4 is a signalling diagram of the account creation process according to the example of the present invention.

In the signalling diagram of Fig. 4, there are shown the messages that are sent between a terminal and a server and also the processing performed by the terminal and the server while performing account creation processing according to the specific example of the present invention.

It is shown in Fig. 4 that at step S1, the terminal composes the account creation request message containing at least its phone number or other identification according to the first access technology (hereinafter referred to as phone number)and optionally a user name. According to this example, the account creation request message is a SMS that is transmitted via GSM. However, it is to be noted that other user messages than SMS, e.g. UDP or the like can be used as the account creation request message. After receiving the account creation request message containing at least the phone number and optionally the user name of the terminal, the server creates an account for the terminal based on and/or for use with the second access technology at step S2. Then, at step S3, the phone number of the terminal is associated with the account of the terminal created by the server. Thus, the server provides a secure binding between the phone number of the terminal based on the first access technology and the account of the terminal based on the second access technology as account settings. After this, the server preferably informs the terminal of the account settings by sending an information message as e.g. a SMS via GSM, as shown at step S4. The account settings are then stored by the terminal in a setting memory and by the server in a storage medium at step S5.

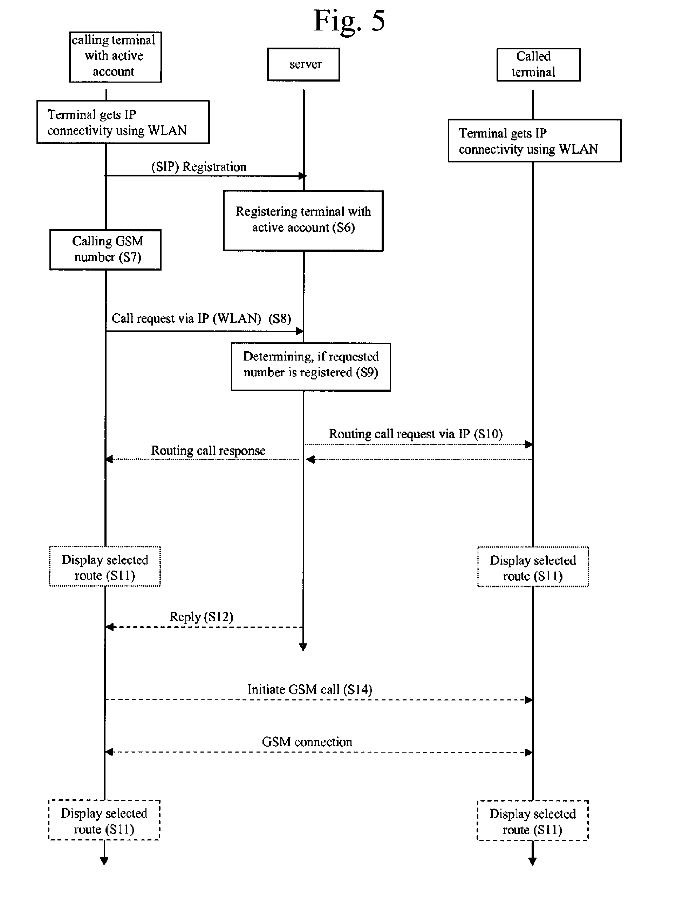

Fig. 5 is a signalling diagram of the call processing procedure according to the example of the first aspect of the present invention.

In the signalling diagram of Fig. 5, there are shown the messages that are sent between a calling terminal and a server and also the processing performed by the terminal and the server while performing the call processing according to the specific example of the present invention.

When terminals with an active account enter the coverage area of the WLAN, the terminals get IP connectivity using WLAN. The server verifies if a calling terminal has an account at the server and if the terminal has an active account, at step S6, the server registers the terminal to the WLAN. Then, if the calling terminal registered at the server 3 is calling a GSM number at step S7, a call request is sent to the server via WLAN at step S8. At step S9, the server determines if a called terminal according to the requested GSM number is registered to the WLAN. If it is determined at step S9 that the called terminal according to the requested GSM number is registered to the WLAN, at step S10, the call is routed via IP to the respective called terminal and in this specific example, the selected route is displayed on the display of the calling terminal and the called terminal at step S11.

If otherwise it is determined at step S9 that the called terminal according to the requested GSM number is not registered to the WLAN (this case is shown in dotted lines in Fig. 5), according to this specific example, the server replies to the calling terminal at step S12 via WLAN that the requested call to the called terminal cannot be routed via WLAN. Upon receipt of the reply from the server, the terminal initiates a GSM call. In this way, the connection between the calling terminal and the called terminal is established via GSM without the participation of the server. At step S11, it is displayed at the calling terminal the called terminal that the connection is established using GSM.

In the foregoing, the present invention has been described in rather general terms. For a better understanding, in the following, a detailed example of the aspects involved in the present invention will be described.

According to the detailed example, the system consists of an improved SIP server / PBX for use in an enterprise, and dual mode WLAN/GSM VoIP devices. The detailed example according to the present invention presents a mechanism for re-use of GSM identifications (phone number) for SIP VoIP calls in enterprise networks, so users do not need to know any SIP address or internal number, and so there is no need to manually choose between GSM and VoIP calls. Thus, the task of deploying VoIP in a medium-size enterprise with little IT support can be enormously facilitated.

According to the detailed example, the improved SIP Server includes a GSM radio and SIM card, so that mobile devices can create SIP/VoIP accounts by sending an SMS to it, and receive the SIP configuration settings. In this way the SIP server stores a secure binding between the SIP account and the GSM number of every user. Hence, devices do not need to know any SIP URI to make SIP-VoIP calls, because GSM phone numbers are used instead. The improved SIP server is able to route SIP messages where the destination ("TO:" field) is a GSM number, to the right SIP/IP address. When the SIP server does not know the location of a GSM number, either because it is not registered or because there is no SIP account bound to it, then a 3xx Redirect is sent to the terminal so that a GSM call is started.

The dual mode terminals according to this detailed example comprise some modification so that this functionality is used. When the dual mode terminal has an active account and is registered to the SIP server, every time the user calls to a GSM/PSTN number, the device will attempt first a VoIP call using the GSM/PSTN number as destination information, and if the other end is not found (account existing and currently registered)in the SIP server, then a GSM call will be made.

Optionally, the user can receive information in the display about the bearer used for the call (GSM or WLAN/VoIP), or can be asked a question such as: "Terminal not available in VoIP network. Try GSM?".

Another option is, when the SIP server has access to a PSTN or GSM gateway. This would allow the server to route calls to the PSTN gateway when the other user is not reachable through VoIP, and GSM is not the cheapest available choice.

Next, installing of the SIP server according to the detailed example will be described. Installing the improved SIP server involves plugging the box to the corporate intranet or WLAN network, and inserting a SIM card in it. This system does not use DNS or domain names so DNS configuration is not needed. A web interface can be provided for management functions, for example to setup a password to create accounts, specify a list of allowed GSM numbers, but the web-interface is not necessary to create SIP accounts since this is done with SMS. Users just need to be informed of the GSM number of the SIP server (and optionally a password) to create their accounts and receive the device settings.

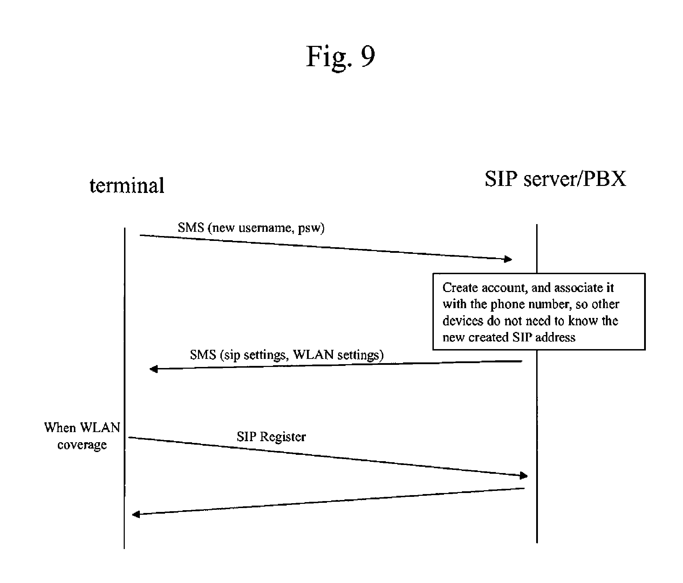

In the following, the creation of an account and configuration of a terminal will be described according to the detailed example with reference to Fig. 9. In order to get an account and start using VoIP with dual mode terminals, users need to send an SMS (optionally with a password) to the improved SIP server. The server will reply to the SMS with the SIP and WLAN settings, (and possibly a link to the necessary terminal software update). After saving all these, each time the user is in WLAN coverage and calls a GSM number, VoIP will be attempted by the device. The SIP server stores the secure bindings between the SIP accounts and the GSM numbers of the enterprise users, so it can correctly route calls. This system can also be used by non-GSM VoIP devices like PCs or PDAs, by copying the SIP account details from the SMS to the PC VoIP client. But the SMS is necessary to create the account, to prevent identity theft. So users can have many clients with the same account.

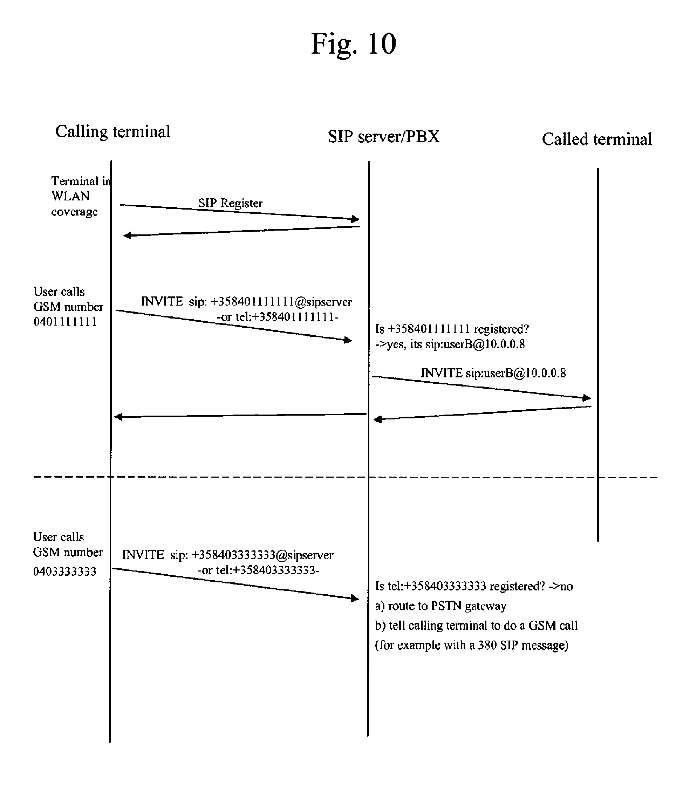

According to Fig. 10, it will now be described how to make a call according to the detailed example of the present invention. From the user point of view, making a call from the dual mode phone is the same as a GSM call, but the processing performed by such a system will be described in the following. When calling to a GSM/PSTN number from a dual mode phone, if the caller has an active account and is registered to the SIP server, an INVITE SIP message will be sent to the SIP server, with the GSM/PSTN number as destination ("TO:" field). The address can be in the form "sip:+358041111111@server-address" or even "tel:+358041111111". The SIP server will then lookup the GSM number to find if there is a SIP account bound to it, and if so it will proxy the message to it, so the call can start over IP. If there is no account for that number or the terminal is not registered to the server, then the server will reply to the caller with a SIP Redirect 3xx message to tell the device to do a GSM call. The SIP 380 "Another Service" message can be used for this purpose.

As an alternative, if the improved SIP server according to the detailed example can be connected to a SIP - PSTN /GSM gateway, instead of telling the terminal to start a GSM call when a user is not registered to the SIP server, the calls can be routed to the gateway which can be cheaper than a GSM call. The server can have intelligence to route the calls to the gateway, for example use the gateway only for long distance or international calls, but keep GSM usage for GSM-GSM national calls. The SIP server can have some least-cost routing intelligence, so some calls are routed using the PSTN gateway, and some are made using only GSM, since this is sometimes cheaper.

Thus, according to the detailed example of the present invention, the following advantages are provided:
- easy way to save money in enterprise calls using GSM/WLAN terminals,
- simple server installation (just plug box to corporate intranet),
- easy creation of account and mobile device setup (just send SMS),
- no web interface or IT support needed for creating accounts,
- minimal IT support required
- GSM number can be re-used (even personal, no need to know SIP addresses),
- transparent for the end user (normal calls, no need to know what is VoIP),
- automatic access technology (bearer) selection (WLAN is used when available),
- secure (based on GSM strong identities),
- compatible with SIP URI calls (when SIP URIs are used, domain name SIP is used),
- works with several clients (PC, PDA, phone or the like),
- does not interrupt or delay parallel SIP deployments, and its compatible thereto.

In view of the foregoing description it will be evident to a person skilled in the art that various modifications may be made within the scope of the invention.

## Claims

1. A method, comprising:
receiving, at a server, a call request from a calling terminal registered to the server according to a second access technology to a called terminal, the request including an identification of the called terminal;
determining, whether the requested identification is associated with an account maintained in the server and the respective called terminal is registered to the server via the second access technology;
and if the requested identification is associated with an account maintained in the server and the respective called terminal is registered to the server via the second access technology;
routing the call request based on the second access technology to the called terminal associated with the respective account;
replying from the server to the calling terminal, if the requested identification is not associated with the account maintained in the server or the respective called terminal is not registered to the server via the second access technology;
wherein subsequent to replying from the server, the method further comprises receiving in the server a second call request from the calling terminal, wherein the second call request is based on the first access technology.

2. The method according to claim 1, further comprising:
initiating the call based on the first access technology after confirmation by the user.

3. The method according to claim 1, further comprising:
initiating the call based on the first access technology by the terminal dependent on a result of a tariff check.

4. The method according to claim 1, further comprising:
deciding, at the server, whether the call is to be routed based on the first access technology or based on a fixed telephone network gateway, if the requested identification is not associated with the account maintained in the server or
the respective called terminal is not registered to the server via the second access technology.

5. The method according to claim 4, further comprising:
routing the call based on the first access technology or based on the fixed telephone network gateway, based on a result of the decision.

6. The method according to claims 1 to 5, further comprising:
displaying which route is used for routing the call on a display of the terminal.

7. A server, comprising means for performing a method according to at least one of claims 1 - 6.

8. A terminal, comprising:
means for transmitting to a server a call request for a call to a called terminal, the request including an identification of the called terminal, while the terminal is registered to the server according to a second access technology; means for receiving a reply from the server, the reply indicating the requested identification is not associated with an account maintained in the server or the respective called terminal is not registered to the server via the second access technology;
wherein, subsequent to receiving the reply, the means for transmitting are configured to transmit to the server a second call request, wherein the second call request is based on the first access technology.

9. A terminal according to claim 8, wherein the terminal is configured to transmit the second call request responsive to confirmation from a user.

10. A method, comprising:
transmitting, from a terminal, to a server a call request for a call to a called terminal, the request including an identification of the called terminal, while the terminal is registered to the server according to a second access technology;
receiving, in the terminal, a reply from the server, the reply indicating the requested identification is not associated with an account maintained in the server or the respective called terminal is not registered to the server via the second access technology;
subsequent to receiving the reply, transmitting, from the terminal, to the server a second call request, wherein the second call request is based on the first access technology.

11. A method according to claim 10, wherein the transmitting of the second call request occurs responsive to confirmation from a user.
